# EUROPEAN PATENT SPECIFICATION

(11) **EP 2 273 847 B1**
(45) Date of publication and mention of the grant of the patent: **03.04.2013**
(21) Application number: 09741716.6
(22) Date of filing: 07.05.2009
(51) Int. Cl.: H04W 88/10

(54) **MULTI-MODE BASE STATION AND TELECOMMUNICATIONS METHOD THEREOF**
MULTIMODALE BASISSTATION UND TELEKOMMUNIKATIONSVERFAHREN DAFÜR
STATION DE BASE MULTIMODE ET SON PROCÉDÉ DE TÉLÉCOMMUNICATION

(30) Priority: 08.05.2008 CN 200810106093
(43) Date of publication of application: 12.01.2011
(73) Proprietor: Huawei Technologies Co., Ltd., Longgang District, Shenzhen Guangdong 518129 (CN)
(72) Inventor: YU, Weidong, Shenzhen Guangdong 518129 (CN); ZHOU, Jun, Shenzhen Guangdong 518129 (CN); YAO, Jianzhong, Shenzhen Guangdong 518129 (CN); PENG, Yi, Shenzhen Guangdong 518129 (CN)
(74) Representative: Thun, Clemens
(86) International application number: PCT/CN2009/071675
(87) International publication number: WO 2009/135441

(56) References cited:
- EP-A1- 1 566 979
- WO-A1-2005/034544
- CN-A- 1 867 118
- CN-A- 1 883 215
- CN-A- 101 107 871
- CN-A- 101 282 517
- US-A1- 2005 107 124
- "Common Public Radio Interface (CPRI); Interface Specification", Internet CPRI Specification V3.0 (2006-10-20), 20 October 2006 (2006-10-20), XP002632189, Retrieved from the Internet: URL:http://www.cpri.info/downloads/CPRI_v_ 3_0_2006-10-20.pdf [retrieved on 2011-04-11]

## Description

### FIELD OF THE INVENTION

The present invention relates to radio communication technologies, and in particular, to a multi-mode Base Station (BS) and its communication method.

### BACKGROUND OF THE INVENTION

Common Public Radio Interface (CPRI) protocol is an interface standard between a Radio Equipment Controller (REC) and a Radio Equipment (RE). The CPRI protocol includes three planes: user data plane, control plane, and synchronization mechanism plane. According to the protocol hierarchy, the CPRI protocol is divided into three layers: physical layer (Layer 1, L1), link layer (Layer 2, L2), and application layer (Layer 7, L7). The CPRI protocol attaches attention to hardware-related protocol layers (L1 and L2), and ensures independent technical evolution performed through limited adaptation of hardware. The CPRI protocol does not stipulate the application layer.

A BS may include two parts: Base Band Unit (BBU) and Radio Frequency Unit (RFU) or Remote Radio Unit (RRU). A CPRI interface standard applies between the BBU and the RFU/RRU. The BBU corresponds to the REC in the CPRI protocol, and the RFU/RRU corresponds to the RE in the CPRI protocol. In order to support effective exchange of control-plane messages of the REC and the RE, the REC and the RE need to work together to implement topology scan. In the topology scan, each RE corresponds to a hop number. If the REC communicates with the RE through a High-level Data Link Control (HDLC) protocol, the main control module in the REC allocates an HDLC address to the corresponding RE according to the hop number so that each RE corresponds to an HDLC slave node. In the existing single-mode BS, only one main control module exists on the REC side. That is, at the time of creating a logical link, only one HDLC master node exists on the REC side, and one HDLC slave node exists on the RE side. Therefore, the REC may communicate with the RE through an HDLC master node and an HDLC slave node.

With the progress of technologies, the multi-mode BS that supports multiple radio standards comes forth. In a multimode BS, at least two main control modules exist on the REC side, and each main control module supports a different radio standard. For example, a BS that supports both Global System for Mobile Communication (GSM) and Universal Mobile Telecommunications System (UMTS) is called a GU dual-mode BS. The prior art has at least the following problems: In the case of a multi-mode BS, corresponding to the main control modules, at least two HDLC master nodes are set on the REC side; an HDLC address is allocated to each RE according to the hop number so that only one HDLC slave node exists on the RE side; one HDLC slave node is unable to communicate with two HDLC master nodes simultaneously. As a result, the CPRI communication method applicable to the existing single-mode BS is no longer applicable to the multi-mode BS.

US2005/0107124 A1 discloses a radio base station has an internal interface connecting a radio equipment (RE) and a radio equipment controller (REC). The RE performs a pre-start-up procedure or method for the internal interface. The pre-start-up procedure is performed preparatory to and/or in conjunction with a start-up procedure for the internal interface. As one of its aspects, the pre-start-up procedure involves storing one or more previously proven combinations of line bit rate and protocol as stored combination for use on the internal interface. Prior to synchronization of the internal interface, the stored combination are retrieved and included in a temporary available set of combinations of line bit rate and protocol. Thereafter the start-up procedure for the internal interface is initiated for the purpose of determining efficacy of the temporary available set. Should synchronization of the physical layer by the start-up procedure succeed, the pre-start-up procedure uses a valid combination of line bit rate and protocol in the available set for negotiating between the REC and the RE. Should the start-up procedure fail, the pre-start-up procedure removes a failed combination of line bit rate and protocol from the set. In another of its aspects, the pre-start-up procedure classifies the stored combinations as: (1) a best last time combination of line bit rate and protocol which was involved in a last successful execution of the start-up procedure; and (2) a union all combinations of line bit rate and protocol for which the synchronization of the physical layer has previously been successful during the start-up procedure. Capitalizing upon the classification, the pre-start-up procedure can use the best last time combination as the temporary available set for initiating the start-up procedure for the internal interface. Then, if the start-up procedure fails, the pre-start-up procedure can resort to using the union of all combinations as the temporary available set for initiating the start-up procedure for the internal interface.CPRI Specification V3.0 (2006-10-20) discloses a radio base station system composed of two basic subsystems, the radio equipment control and the radio equipment. Radio base stations should provide deployment flexibility for the mobile network operators. This may be achieved by a decomposition of the radio base station into two basic building blocks, the radio equipment control and the radio equipment itself. Both parts may be physically separated or both may be co-located as in a conventional radio base station design. The radio equipment control contains the radio functions of the digital baseband domain, whereas the radio equipment contains the analogue rdio frequency functions. The functional split between both parts is done in such a way that a generic interface based on In-Phase and Quadrature (IQ) data can be defined. For the UMTS radio access network, the radio equipment control provides access to the radio network controller via the lub interface, whereas the radio equipment serves as the air interface, called the Uu interface, to the user equipment. For WiMAX, the radio equipment control provides access to network entities, whereas the radio equipment serves as the air interface to the subscriber station/mobile subscriber station.

### SUMMARY OF THE INVENTION

The present invention provides a multi-mode BS and its communication method.

In one aspect, a multi-mode BS communication method provided in an embodiment of the present invention includes:
creating a physical link between an REC and an RE in a multi-mode BS, where the REC includes at least two main control modules;
setting a corresponding master node for each main control module in the REC, and setting multiple slave nodes corresponding to the master nodes respectively in the RE;
creating logical links between master nodes and corresponding slave nodes respectively in the physical link; and
transmitting data through the logical links;
wherein the creating the logical links comprises:
   sending, by each main control module in the REC, an address allocation command to the RE, wherein the address allocation command carries an address allocated to a corresponding slave node in the RE, wherein the addresses of the multiple slave nodes in the RE are distinguished by a first bit or first several bits of the addresses;
   setting, by the RE, the address of the corresponding slave node to the allocated address;
   sending, by the corresponding slave node, an address allocation response to a corresponding master node, wherein the address allocation response carries configuration parameter information; and
   performing data configuration for a logical link between the corresponding master node and the corresponding slave node according to the configuration parameter information.

In another aspect, a multi-mode BS provided in an embodiment of the present invention includes:
an REC, which includes at least two main control modules and master nodes, where each master node is set for each main control module respectively;
an RE, which includes multiple slave nodes corresponding to the master nodes in the REC respectively; and
a physical link between the REC and the RE, where the physical link carries logical links between master nodes and the corresponding slave nodes;
wherein each main control module in the REC is adapted to send an address allocation command to the RE, wherein the address allocation command carries an address allocated to a slave node in the RE, wherein the addresses of the multiple slave nodes in the RE are distinguished by a first bit or first several bits of the addresses;
the RE is adapted to set the address of the corresponding slave node to the allocated address;
the slave node is adapted to send an address allocation response to the corresponding master node, wherein the address allocation response carries configuration parameter information; and
the corresponding master node and the slave node are adapted to perform data configuration for the corresponding logical link according to the configuration parameter information.

In the foregoing technical solution, multiple slave nodes are set on the RE side so that each slave node corresponds to each master node on the REC side. In this way, a communication link can be created between each slave node and the corresponding master node respectively. In a multi-mode scenario, the REC can communicate with the RE, and the technical solution is applicable to the multi-mode BS.

### BRIEF DESCRIPTION OF THE DRAWINGS

FIG. 1 is a flowchart of a multi-mode BS communication method in an embodiment of the present invention;
FIG. 2 is a flowchart of creating logical links in a multi-mode BS communication method in an embodiment of the present invention;
FIG. 3 shows a structure of an interface between an REC and an RE in a multi-mode BS in an embodiment of the present invention;
FIG. 4 shows a structure of a multi-mode BS in an embodiment of the present invention; and
FIG. 5 shows a protocol stack between entities in a multi-mode BS in an embodiment of the present invention.

### DETAILED DESCRIPTION OF THE EMBODIMENTS

The technical solution under the present invention is elaborated below with reference to accompanying drawings and preferred embodiments.

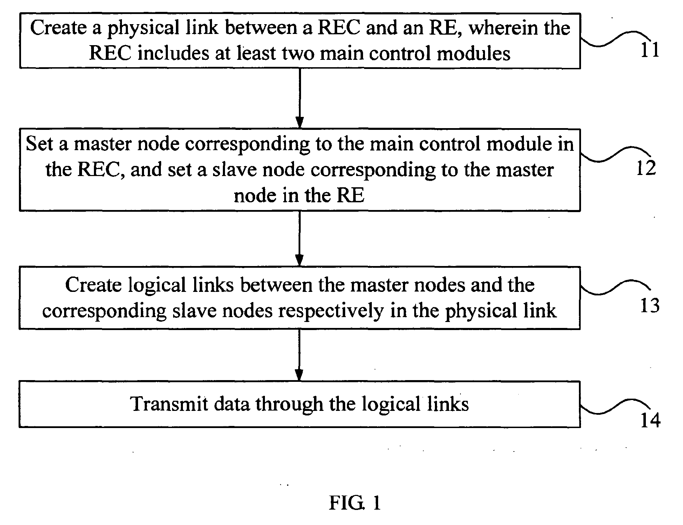

FIG. 1 is a flowchart of a multi-mode BS communication method in an embodiment of the present invention. The method includes the following steps:
Step 11: Create a physical link between an REC and an RE in a multi-mode BS. The REC includes at least two main control modules. The physical link may be a CPRI link.
Step 12: Set a master node corresponding to a main control module in the REC, and set a slave node corresponding to the master node in the RE.

In order to prevent the corresponding relation between multiple master nodes and one slave node which leads to communication failure, multiple slave nodes corresponding to the master nodes are respectively set in the RE. In practice, an RE may be set through software to make the RE support multiple slave nodes.

Step 13: Create logical links between master nodes and the corresponding slave nodes respectively in the physical link.

The logical links may be HDLC links.

Step 14: Transmit data through the logical links.

For example, layer-7 messages are transmitted through I frames based on the HDLC standard. Because a logical link corresponds to a main control module, different logical links are created corresponding to different radio standards. Each logical link receives only the data on this link, and discards the data on other links. In this way, multiple radio standards are supported simultaneously.

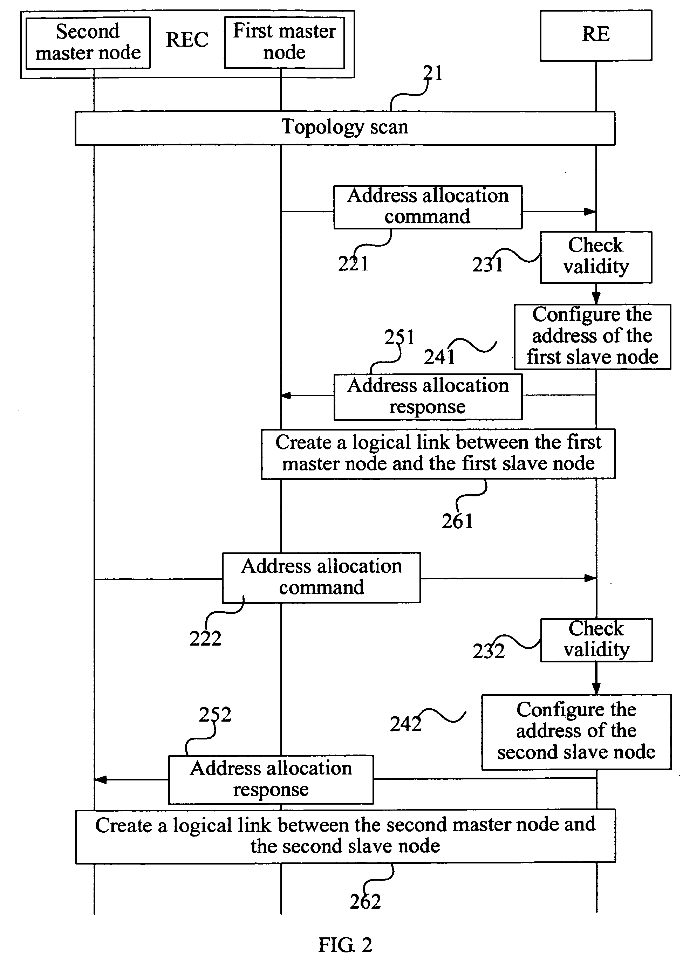

As shown in FIG. 2, step 13 may include the following (1), (2), (3), and (4):
(1) Each main control module in the REC sends an address allocation command to the RE respectively through the corresponding master node. The address allocation command carries the address allocated to a slave node in the RE, where a logical link is to be created for the slave node. More specifically, this step includes the following:
Step 221: A first main control module sends an address allocation command to the RE through a first master node.
Step 222: A second main control module sends an address allocation command to the RE through a second master node.
Step 221 may occur before, after or in parallel with step 222.
Step 221 together with subsequent steps such as step 231, step 241, step 251, and step 261 form the process of creating a logical link between the first master node and the corresponding slave node. Step 222 combines with subsequent operations such as step 232, step 242, step 252, and step 262 into the process of creating a logical link between the second master node and the corresponding slave node. The process of creating a logical link between the first master node and the corresponding slave node may occur before, after or in parallel with the process of creating a logical link between the second master node and the corresponding slave node. In the embodiment shown in FIG. 2, the process of creating a logical link between the first master node and the corresponding slave node occurs before the process of creating a logical link between the second master node and the corresponding slave node.

The address allocation command may be broadcast through an XID frame based on an HDLC protocol. Multiple main control modules exist on the REC side. That is, at the time of creating logical links such as HDLC links, multiple master nodes exist. In order to create different HDLC links corresponding to the master nodes respectively, the corresponding slave nodes need to exist on the RE side. In this way, an HDLC link can be created between each master node and the corresponding slave node.
After sending the address allocation command, the REC waits for a response. If the REC fails to receive a response to the address allocation command within a preset time, the REC performs timeout processing and sends the address allocation command to the RE again. Because this embodiment relates to the multi-mode BS, at least two main control modules exist in the REC. For example, in the case of GU dual-mode BS, the REC includes a UMTS BBU and a GSM BBU. If the REC communicates with the RE through an HDLC, an HDLC master node is set for each main control module on the REC side. For the purpose of differentiation, the HDLC master node corresponding to the UMTS BBU is called the first HDLC master node, and the HDLC master node corresponding to the GSM BBU is called the second HDLC master node. The REC may send the address allocation command at the default line rate through broadcast XID frames. The address allocation command includes, without being limited to, the information set out in Table 1:

**Table 1**

| Field | Content | Description |
|---|---|---|
| HDLC address | 0xFF | Address for receiving the HDLC frame, which is a broadcast address here |
| Control type | XID | XID control frame type |
| CPRI port identifier | Integer type (0..5) | Identifier of the port connected with the CPRI link on the REC side |
| RE hop number | Integer type (0..0x8F) | RE hop number |
| RE HDLC address | Integer type (1.0.254) | HDLC address allocated by the REC to the RE |
| REC radio standard | Bit map type | Radio standard information supported by the REC that sends this message, where a bit set to "1" indicates support of the corresponding standard: |
| | | B7: WCDMA |
| | | B6: GSM |
| | | B5: CDMA |
| | | B4:WIMAX |
| | | B3: LTE |
| | | B2: UMB |
| | | B1-B0: Reserved |
| | | If the REC supports multiple standards, the corresponding several bits are set to "1" |

The foregoing address allocation command may be carried in vendor-specific subchannels 17-19 shown in Table 2. The specifically occupied subchannel may depend on the number of bytes occupied by the address allocation command.
(2) The RE sets the corresponding initialized address of the slave node to the allocated address. More specifically, this step includes the following:
Step 241: Set the first slave node corresponding to the first master node.
Step 242: Set the second slave node corresponding to the second master node.
Step 241 may occur before, after or in parallel with step 242.
   During startup of the RE, the slave node is initialized. That is, at the time of startup, the address of each slave node is set to 0. After the address allocation command is received, the address of the initialized slave node is set to the HDLC address carried in the address allocation command. In order to cope with exceptions such as RE intermittency or REC resetting, if the slave node address to be set is not all 0s and the address allocation command carries an HDLC address different from the existing address of the slave node, the RE clears the address of the slave node and reports an address conflict message to the REC.

(3) The slave node sends an address allocation response to the corresponding master node. The address allocation response carries configuration parameter information. More specifically, this step includes the following:
Step 251: The first slave node sends an address allocation response to the first master node.
Step 252: The second slave node sends an address allocation response to the second master node.
Step 251 may occur before, after or in parallel with step 252.
The address allocation response may be transmitted through an XID frame based on an HDLC protocol. The address allocation response includes, without being limited to, the information set out in Table 2:

**Table 2**

| Field | Content | Description |
|---|---|---|
| HDLC address | Integer type (1.0.254) | HDLC address of the RE, delivered through an HDLC address allocation message |
| Control type | XID | XID control frame type |
| CPRI port identifier | Integer type (0..5) | Identifier of the port connected with the CPRI link on the REC side |
| RE hop number | Integer type (0..0x8F) | RE hop number |
| RE HDLC address | Integer type (1.0.254) | HDLC address allocated by the REC to the RE |
| CPRI line rate supported by the RE | Data structure | CPRI line rate supported by the RE |
| Other information | Data structure | Other optional information, for example, delay parameter |
| RE radio standard | Bit map type | Radio standard information supported by the RE that sends this message, where a bit set to "1" indicates support of the corresponding standard: |
| | | B7: WCDMA |
| | | B6: GSM |
| | | B5: CDMA |
| | | B4: WIMAX |
| | | B3: LTE |
| | | B2: UMB |
| | | B1-B0: Reserved |
| | | If the RE supports multiple standards, the corresponding several bits are set to "1" |

(4) The logical link data configuration is performed according to the address allocation response. More specifically, this step includes the following:
Step 261: Create a logical link between the first master node and the first slave node.
Step 262: Create a logical link between the second master node and the second slave node.
Step 261 may occur before, after or in parallel with step 262.
   The logical link data configuration may be implemented through XID frames based on the HDLC standard. After receiving the address allocation response, the REC performs HDLC link data configuration according to the parameters carried in the address allocation response. Upon completion of parameter configuration, the HDLC communication link is created between the HDLC master node and the corresponding HDLC slave node. In order to send an address allocation command to the RE, step 13 may further include:
   Step 21: The REC obtains the hop number of the RE through topology scan, and sends an address allocation command to the RE according to the hop number. The REC and the RE are started up, and the topology scan is performed to let the REC know the hop number of each RE.

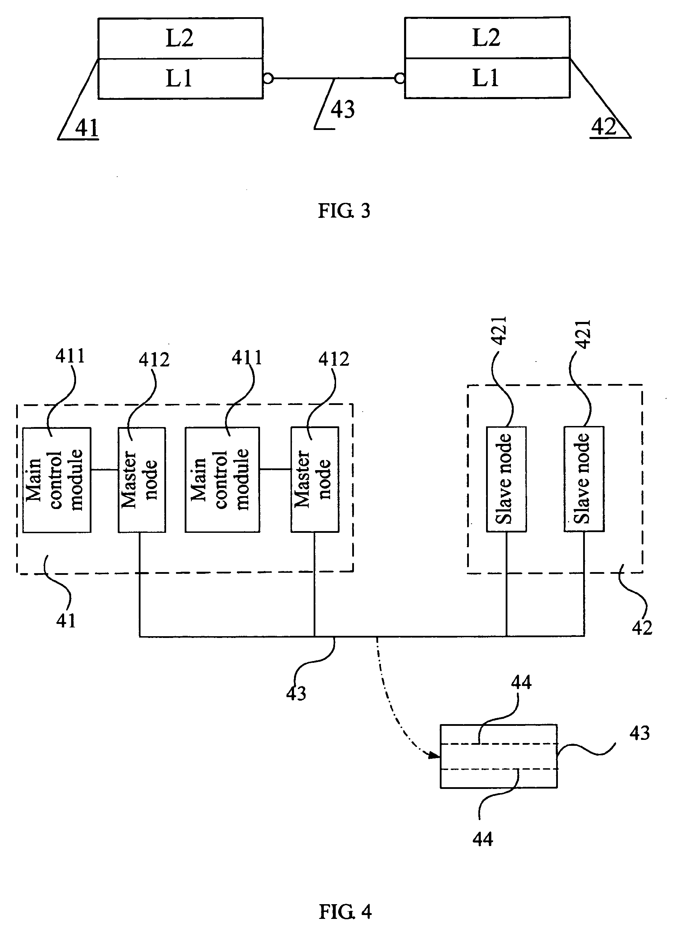

FIG. 3 shows a structure of communication between an REC 41 and an RE 42 through a CPRI interface 43. The CPRI is a standard specific to the physical layer (L1) and the link layer (L2). The two layers are shown on the REC side and the RE side in FIG. 3. On the physical layer, 256 control words of each hyperframe are organized into 64 subchannels in a certain format, and each subchannel includes four control words. Table 3 shows the contents transmitted on the 64 subchannels:

**Table 3**

| subchannel number Ns | purpose of subchannel | Xs=0 | Xs=1 | Xs=2 | Xs=3 |
|---|---|---|---|---|---|
| 0 | sync&timing | sync byte K28.5 | HFN | BFN-low | BFN-high |
| 1 | slow C&M | slow C&M | slow C&M | slow C&M | slow C&M |
| 2 | L1 inband prot. | version | startup | L1-reset-LOS... | pointer p |
| 3 | reserved | reserved | reserved | reserved | reserved |
| ... | ... | ... | ... | ... | ... |
| 15 | reserved | reserved | reserved | reserved | reserved |
| 16 | vendor specific | vendor specific | vendor specific | vendor specific | vendor specific |
| ... | ... | ... | ... | ... | ... |
| p-1 | vendor specific | vendor specific | vendor specific | vendor specific | vendor specific |
| pointer. p | fast C&M | fast C&M | fast C&M | fast C&M | fast C&M |
| ... | ... | ... | ... | ... | ... |
| 63 | fast C&M | fast C&M | fast C&M | fast C&M | fast C&M |

The vendor specific subchannels (subchannel 16 - subchannel p-1) may be customized according to the product requirements.

In the GU dual-mode scenario, the REC includes two main control modules: GSM BBU and UMTS BBU. The RE is a Radio Frequency Unit (RFU, or RRU). Depending on the actual application, the RFU may be in the form of a chain, star or ring. Therefore, multiple REs may exist, and two slave nodes may be set within each RE. Multiple REs may form different topologies. In order for the REC to send information to an RE accurately, it is necessary to know the hop number of each RE through topology scan before the REC communicates with the RE. The topology scan process is as follows:
(1) The REC sets Hop Number=0 and M&S Attribute=Master in the control field of a delivered CPRI frame. The first level of RE connected with a BBU receives the CPRI frame from its upper optical interface. According to M&S Attribute=Master, the first level of RE knows that the attribute of the optical interface of the BBU is "Master". Afterward, the RE sets its upper optical interface to "Slave", sets its lower optical interface to "Master", increase the Hop Number by 1, and transmit the hop number to a lower-level RE. This process goes on to make the Hop Numbers correspond to the REs. As shown in Table 4, the Hop Number and the M&S Attribute can be set in the vendor specific subchannel 16.
(2) The lower optical interface of an RE also receives a CPRI frame sent by a lower-level RE. If the RE detects no information about a lower level of RE, it indicates that the RE is a link end. In this case, the RE transmits its own hop number to an upper-level RE. If the RE detects the hop number sent by the lower-level RE, the RE transmits the hop number to the upper-level RE directly. Therefore, each level of RE on the CPRI link can obtain a hop number. According to the finally obtained hop number, the REC can know the quantity of REs on the CPRI link, and position each level of RE according to the hop number.

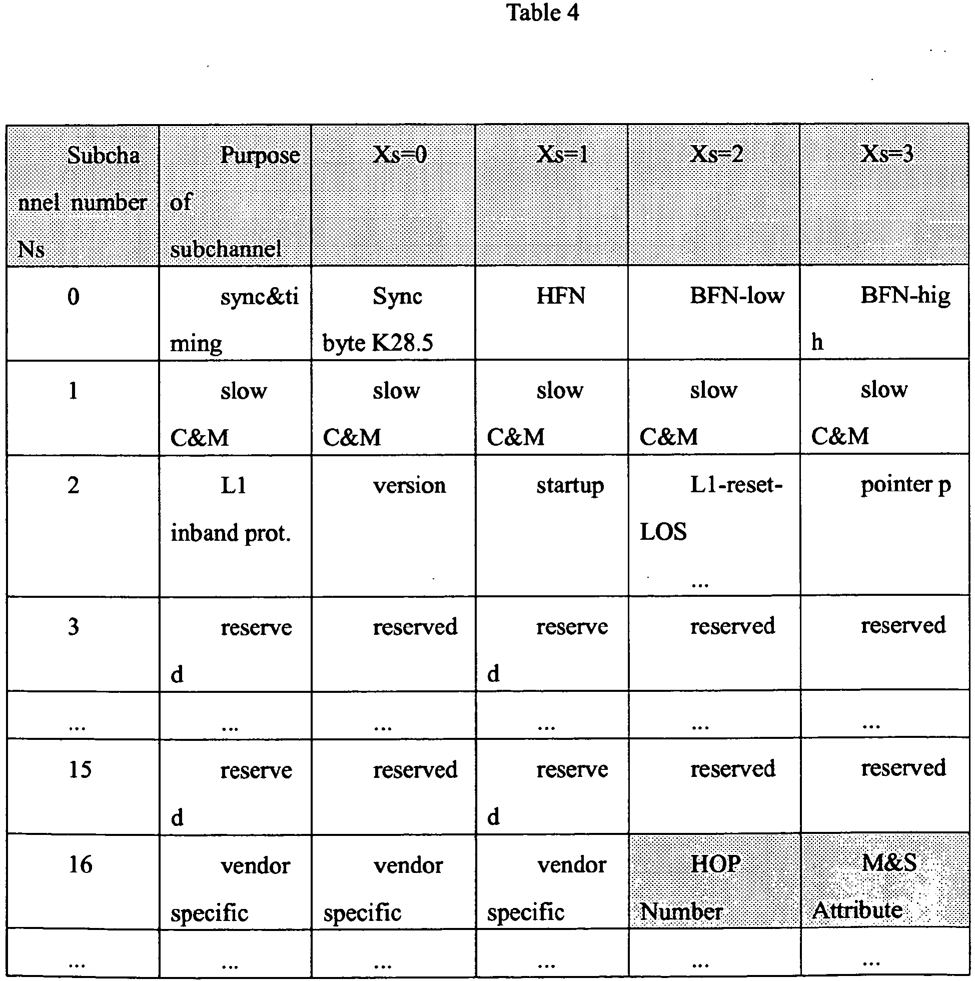

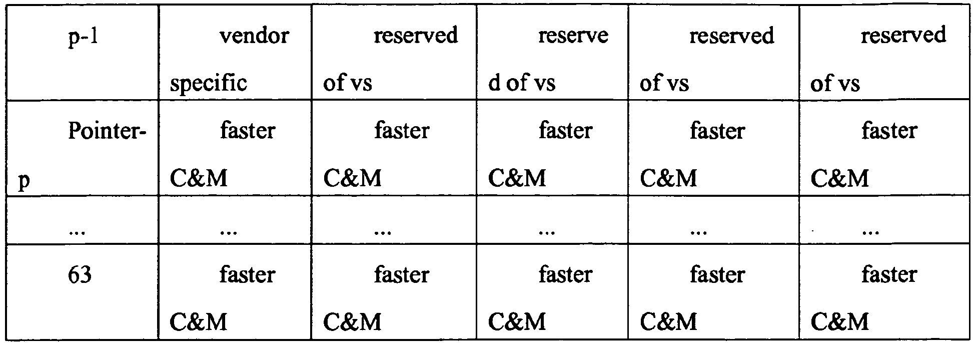

In the existing single-mode BS, the REC includes only one main control module and one corresponding master node. The REC main control module allocates an HDLC address to each hop number. Through the HDLC master node located on the REC side and the HDLC slave node located on the RE side, the REC communicates with the RE, which is characterized by: only one HDLC slave node address exists on each RE. However, in a multi-mode BS, the REC includes at least two main control modules and at least two corresponding master nodes. Therefore, it is not practicable to allocate one slave node HDLC address to each RE according to the hop number, and at least two slave nodes need to be set on the RE side in order to accomplish normal communication between the REC and the RE. A communication link is created between each master node and the corresponding slave node. In this way, normal communication between the REC and the RE is ensured in the case of the multi-mode BS. For differentiation between standards, when the REC allocates addresses to each HDLC slave node, the first bit or the first several bits of the allocated address may serve the purpose of differentiation. For example, in the dual-mode scenario, the address "OXXXXXXX" represents a standard and the address "1XXXXXXX" represents another standard. Similarly, in the case that more standards exist, the first several bits of the address may serve the purpose of differentiation. For example, if four standards exist, the first two bits of the address serve the purpose of differentiation.

Before the RE allocates an address to a slave node, step 13 may further include: The RE checks whether the received address allocation command is valid. More specifically, this step includes the following:
Step 231: The RE checks whether the address allocation command sent by the first master node is valid.
Step 232: The RE checks whether the address allocation command sent by the second master node is valid.
Step 231 may occur before, after or in parallel with step 232.

The validity check process includes: checking whether the address allocation command is sent to the RE according to the ID (port number and hop number) in the address allocation command; and checking whether the RE supports the REC radio standard in the address allocation command. If the results of the foregoing judgment are positive, the address allocation command is valid. If either result of the foregoing judgment is negative, namely, if the ID (port number and hop number) in the address allocation command mismatches the RE, or if the RE does not support the radio standard in the address allocation command, the RE discards the address allocation command, and the REC performs timeout processing.

In this embodiment, multiple slave nodes are set on the RE side. Therefore, each master node corresponding to a different radio standard can find the corresponding slave node, and create a communication link with the corresponding slave node, and normal communication is implemented in a multi-mode BS that involves multiple main control modules.

Persons of ordinary skill in the art should understand that all or a part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a ROM, a RAM, a magnetic disk, or a CD-ROM.

FIG. 4 shows a structure of a multi-mode BS in an embodiment of the present invention. The multi-mode BS includes an REC 41, an RE 42, and a physical link 43. The REC 41 includes at least two main control modules 411. A master node 412 corresponding to a main control module is set in the REC 41. FIG. 4 shows the scenario with two main control modules corresponding to two slave nodes. A slave node 421 corresponding to a master node in the REC 41 is set in the RE 42. The physical link 43 is connected with the REC 41 and the RE 42. Logical links 44 are created for connecting the master nodes with the corresponding slave nodes. One logical link 44 connects one master node 412 with one corresponding slave node 421; and the other logical link 44 connects another master node 412 with another corresponding slave node 421. As shown in FIG. 4, the physical link 43 may carry two logical links 44.

Each main control module 411 in the REC 41 sends an address allocation command to the RE 42 respectively. The address allocation command carries an address allocated to a slave node 421 in the RE 42, where a logical link 44 is to be created for the slave node 421. After receiving the address allocation command, the RE 42 sets the corresponding initialized address of the slave node to the address allocated by the corresponding main control module 411. After completion of setting the address, the slave node 421 sends an address allocation response to the corresponding master node 412. The address allocation response carries configuration parameter information. The master node 412 and the corresponding slave node 421 perform data configuration for the corresponding logical link according to the configuration parameter information in order to create the logical link between the master node 412 and the corresponding slave node 421.

The main control module 411 supports data of different radio standards, for example, GSM standard or UMTS standard. Generally, the data format (namely, transport protocol) employed on the REC side is different from that employed on the RE side. Therefore, the master node 412 is further adapted to perform data conversion between the REC and the RE to enable communication between the REC and the RE, as detailed below.

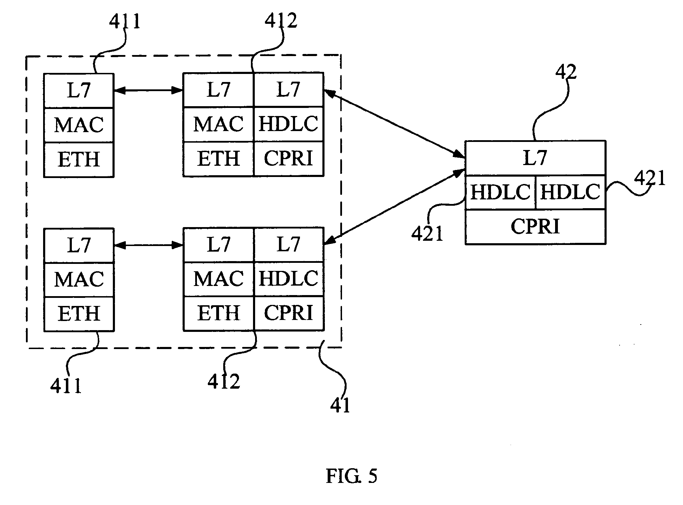

FIG. 5 shows a protocol stack between entities in a multi-mode BS. The REC 41 in FIG. 5 includes two main control modules 411, and the master nodes 412 corresponding to the main control modules. The RE 42 includes two corresponding slave nodes 421. The protocol layers in a main control module 411 are L7, MAC, and ETH. In this embodiment, the REC 41 link layer communicates with the RE 42 link layer through an HDLC protocol. The physical layer of the REC 41 and RE 42 employs a CPRI interface, or employs another protocol. Therefore, the protocol layers in the RE 42 are L7, HDLC, and CPRI. In order to make the REC 41 communicate with the RE 42, the master node 412 needs to perform data conversion between the REC 41 and the RE 42. Therefore, the master node 412 includes a protocol stack of L7, MAC, and ETH; and a protocol stack of L7, HDLC, and CPRI. Through the two protocol stacks, data conversion is implemented between the REC 41 and the RE 42. After the data conversion, peer-layer communication can be performed between the entities.

In this embodiment, communication links are created between the REC of multiple main control modules and the RE that includes multiple slave nodes respectively to enable normal operation of a multi-mode BS.

Finally, it should be noted that the above embodiments are merely provided for describing the technical solutions of the present invention, but not intended to limit the present invention. It is apparent that persons skilled in the art can make various modifications and variations to the invention without departing from the scope of the invention. The present invention is intended to cover the modifications and variations provided that they fall in the scope of protection defined by the following claims.

## Claims

1. A multi-mode Base Station, BS, communication method, comprising:
creating (11) a physical link between a Radio Equipment Controller, REC, and a Radio Equipment, RE, in a multi-mode BS, wherein the REC comprises at least two main control modules;
setting (12) a corresponding master node for each of the at least two main control modules in the REC, and setting multiple slave nodes in the RE, wherein each of the multiple slave node is set for a master node;
creating (13) logical links between master nodes and corresponding slave nodes respectively in the physical link; and
transmitting (14) data through the logical links;
wherein the logical links are High-level Data Link Control, HDLC, links, and the creating the logical links comprises:
sending (221, 222), by each main control module in the REC, an address allocation command to the RE, wherein the address allocation command carries an address allocated to a corresponding slave node in the RE, wherein the addresses of the multiple slave nodes in the RE are distinguished by a first bit or first several bits of the addresses;
setting (241, 242), by the RE, the address of the corresponding slave node to the allocated address;
sending (251, 252), by the corresponding slave node, an address allocation response to a corresponding master node, wherein the address allocation response carries configuration parameter information; and
performing (261, 262) data configuration for a logical link between the corresponding master node and the corresponding slave node according to the configuration parameter information.

2. The method of claim 1, further comprising:
clearing (241, 242), by the RE, the address of the slave node and reporting, by the RE, an address conflict message to the REC if the address of the slave node is not all 0s and the address carried in the address allocation command and allocated to the slave node in the RE is different from the existing address of the slave node.

3. The method of claim 1, wherein the sending the address allocation command comprises:
obtaining (21), by the REC, a hop number of the RE through topology scan; and
sending (21), by each main control module in the REC, the address allocation command to the RE according to the hop number.

4. The method of claim 1, wherein the setting the address comprises:
setting (241, 242), by the RE, the address of the corresponding slave node to the allocated address after determining that the address allocation command is valid.

5. The method according to any of claims 1-4, wherein before the setting, by the RE, the address of the corresponding slave node to the allocated address, the method further comprises:
judging (231, 232), by the RE, whether the address allocation command is valid according to an identifier, ID, and a radio standard in the address allocation command.

6. The method of claim 5, wherein:
the address allocation command is valid if the ID in the address allocation command matches the ID of the RE and the RE supports the radio standard in the address allocation command.

7. The method of claim 5, wherein:
the address allocation command is invalid if the ID in the address allocation command does not match the ID of the RE or the RE does not support the radio standard in the address allocation command.

8. The method of claim 1, wherein:
the physical link is a Common Public Radio Interface, CPRI, link.

9. A multi-mode Base Station, BS, comprising:
a Radio Equipment Controller, REC (41), which comprises at least two main control modules (411) and at least two master nodes (412), wherein each master node is set for each main control module;
a Radio Equipment, RE (42), which comprises multiple slave nodes (421), wherein each slave node is set for a master node in the REC; and
a physical link (43)between the REC and the RE, wherein the physical link carries logical links (44)between the master nodes and the corresponding slave nodes which are High-level Data Link Control, HDLC, links;
wherein each main control module in the REC is adapted to send an address allocation command to the RE, wherein the address allocation command carries an address allocated to a slave node in the RE, wherein the addresses of the multiple slave nodes in the RE are distinguished by a first bit or first several bits of the addresses;
the RE is adapted to set the address of the corresponding slave node to the allocated address;
the slave node is adapted to send an address allocation response to the corresponding master node, wherein the address allocation response carries configuration parameter information; and
the corresponding master node and the slave node are adapted to perform data configuration for the corresponding logical link according to the configuration parameter information.

10. The multi-mode BS of claim 9, wherein:
each main control module is adapted to support data of a different radio standard.

11. The multi-mode BS of claim 9, wherein:
the master node is further adapted to perform data conversion between the REC and the RE.

12. The multi-mode BS of claim 9, wherein:
the RE is further adapted to judge whether the address allocation command is valid according to an identifier, ID, and a radio standard in the address allocation command, and set the address of he slave node to the allocated address after judging that the address allocation command is valid.

## Patentansprüche

1. Multimodale Basisstation BS, Kommunikationsverfahren, umfassend:
Erzeugen (11) einer physikalischen Verbindung zwischen einer Funkgerätesteuerung, REC (REC = Radio Equipment Controller), und einem Funkgerät, RE (RE = Radio Equipment), in einer multimodalen BS, wobei die REC mindestens zwei Hauptsteuerungsmodule umfasst;
Festlegen (12) eines entsprechenden Hauptknotens für jedes der mindestens zwei Hauptsteuerungsmodule in der REC und Festlegen von mehreren Nebenknoten in dem RE, wobei jeder der mehreren Nebenknoten für einen Hauptknoten festgelegt wird;
Erzeugen (13) von logischen Verbindungen zwischen Hauptknoten beziehungsweise entsprechenden Nebenknoten in der physikalischen Verbindung; und
Übertragen (14) von Daten durch die logischen Verbindungen;
wobei die logischen Verbindungen HDLC-Verbindungen (HDLC = High-Level Data Link Control - Hochpegel-Datenübertragungssteuerung) sind und das Erzeugen der logischen Verbindungen umfasst:
Senden (221, 222) durch jedes Hauptsteuerungsmodul in der REC eines Adresszuteilungsbefehls zu dem RE, wobei der Adresszuteilungsbefehl eine einem entsprechenden Nebenknoten in dem RE zugeteilte Adresse führt, wobei die Adressen der mehreren Nebenknoten in dem RE durch ein erstes Bit oder erste mehrere Bit der Adressen unterschieden werden;
Festlegen (241, 242) durch das RE der Adresse des entsprechenden Nebenknotens auf die zugeteilte Adresse;
Senden (251, 252) durch den entsprechenden Nebenknoten einer Adresszuteilungsantwort zu einem entsprechenden Hauptknoten, wobei die Adresszuteilungsantwort Konfigurationsparameterinformationen führt; und
Durchführen (261, 262) von Datenkonfiguration für eine logische Verbindung zwischen dem entsprechenden Hauptknoten und dem entsprechenden Nebenknoten gemäß den Konfigurationsparameterinformationen.

2. Verfahren nach Anspruch 1, weiterhin umfassend:
Löschen (241, 242) durch das RE der Adresse des Nebenknotens und Melden durch das RE einer Adressenkonfliktnachricht zur REC, wenn die Adresse des Nebenknotens nicht nur Nullen beträgt und sich die in dem Adresszuteilungsbefehl geführte
und dem Nebenknoten in dem RE zugeteilte Adresse von der bestehenden Adresse des Nebenknotens unterscheidet.

3. Verfahren nach Anspruch 1, wobei das Senden des Adresszuteilungsbefehls umfasst:
Erhalten (21) durch die REC einer Sprungnummer des RE durch Topologieabtastung; und
Senden (21) durch jedes Hauptsteuerungsmodul in der REC des Adresszuteilungsbefehls an das RE gemäß der Sprungnummer.

4. Verfahren nach Anspruch 1, wobei das Festlegen der Adresse umfasst:
Festlegen (241, 242) durch das RE der Adresse des entsprechenden Nebenknotens auf die zugeteilte Adresse nach Bestimmen, dass der Adresszuteilungsbefehl gültig ist.

5. Verfahren nach einem beliebigen der Ansprüche 1-4, wobei vor dem Festlegen durch das RE der Adresse des entsprechenden Nebenknotens auf die zugeteilte Adresse das Verfahren weiterhin umfasst:
Beurteilen (231, 232) durch das RE, ob der Adresszuteilungsbefehl gültig ist, entsprechend einer Kennung, ID, und eines Funkstandards in dem Adresszuteilungsbefehl.

6. Verfahren nach Anspruch 5, wobei:
der Adresszuteilungsbefehl gültig ist, wenn die ID in dem Adresszuteilungsbefehl mit der ID des RE übereinstimmt und das RE den Funkstandard in dem Adresszuteilungsbefehl unterstützt.

7. Verfahren nach Anspruch 5, wobei:
der Adresszuteilungsbefehl ungültig ist, wenn die ID in dem Adresszuteilungsbefehl nicht mit der ID des RE übereinstimmt oder das RE den Funkstandard in dem Adresszuteilungsbefehl nicht unterstützt.

8. Verfahren nach Anspruch 1, wobei:
die physikalische Verbindung eine CPRI-Verbindung (CPRI = Common Public Radio Interface - gemeinsame öffentliche Funkschnittstelle) ist.

9. Multimodale Basisstation BS, umfassend:
eine Funkgerätesteuerung, REC (REC = Radio Equipment Controller) (41), die mindestens zwei Hauptsteuerungsmodule (411) und mindestens zwei Hauptknoten (412) umfasst, wobei jeder Hauptknoten für jedes Hauptsteuerungsmodul festgelegt ist;
ein Funkgerät, RE (RE = Radio Equipment) (42), das mehrere Nebenknoten (421) umfasst, wobei jeder Nebenknoten für einen Hauptknoten in der REC festgelegt ist; und
eine physikalische Verbindung (43) zwischen der REC und dem RE, wobei die physikalische Verbindung logische Verbindungen (44) zwischen den Hauptknoten und den entsprechenden Nebenknoten führt, die HDLC-Verbindungen sind (HDLC = High-Level Data Link Control - Hochpegel-Datenübertragungssteuerung);
wobei jedes Hauptsteuerungsmodul in der REC zum Senden eines Adresszuteilungsbefehls zu dem RE eingerichtet ist, wobei der Adresszuteilungsbefehl eine einem Nebenknoten in dem RE zugeteilte Adresse führt, wobei die Adressen der mehreren Nebenknoten in dem RE durch ein erstes Bit oder erste mehrere Bit der Adressen unterschieden werden;
das RE zum Festlegen der Adresse des entsprechenden Nebenknotens auf die zugeteilte Adresse eingerichtet ist;
der Nebenknoten zum Senden einer Adressenzuteilungsantwort zu dem entsprechenden Hauptknoten eingerichtet ist, wobei die Adressenzuteilungsantwort Konfigurationsparameterinformationen führt; und
der entsprechende Hauptknoten und der Nebenknoten zum Durchführen von Datenkonfiguration für die entsprechende logische Verbindung entsprechend den Konfigurationsparameterinformationen eingerichtet sind.

10. Multimodale BS nach Anspruch 9, wobei:
jedes Hauptsteuerungsmodul zum Unterstützen von Daten eines unterschiedlichen Funkstandards eingerichtet ist.

11. Multimodale BS nach Anspruch 9, wobei:
der Hauptknoten weiterhin zum Durchführen von Datenumwandlung zwischen der REC und dem RE eingerichtet ist.

12. Multimodale BS nach Anspruch 9, wobei:
das RE weiterhin zum Beurteilen eingerichtet ist, ob der Adresszuteilungsbefehl gültig ist gemäß einer Kennung, ID, und einem Funkstandard in dem Adresszuteilungsbefehl, und Festlegen der Adresse des Nebenknotens auf die zugeteilte Adresse nach Beurteilen, dass der Adresszuteilungsbefehl gültig ist.

## Revendications

1. Procédé de communication de Station de Base, BS, multimode, comprenant :
la création (11) d'une liaison physique entre un Contrôleur d'Equipement Radio, REC, et un Equipement Radio, RE, dans une BS multimode, le REC comprenant au moins deux modules de commande principaux ;
le réglage (12) d'un noeud maître correspondant pour chacun des au moins deux modules de commande principaux dans le REC, et le réglage de noeuds esclaves multiples dans le RE, chacun des noeuds esclaves multiples étant réglé pour un noeud maître ;
la création (13) de liaisons logiques entre des noeuds maîtres et des noeuds esclaves correspondants respectivement dans la liaison physique ; et
la transmission (14) de données par le biais des liaisons logiques ;
dans lequel les liaisons logiques sont des liaisons à Commande de Liaison de Données de Haut Niveau, HDLC, et la création des liaisons logiques comprend :
l'envoi (221, 222) par chaque module de commande principal dans le REC, d'une commande d'attribution d'adresse au RE, la commande d'attribution d'adresse comportant une adresse attribuée à un noeud esclave correspondant dans le RE, les adresses des noeuds esclaves multiples dans le RE étant différenciées par un premier bit ou plusieurs premiers bits des adresses ;
le réglage (241, 242), par le RE, de l'adresse du noeud esclave correspondant sur l'adresse attribuée ;
l'envoi (251, 252), par le noeud esclave correspondant, d'une réponse d'attribution d'adresse à un noeud maître correspondant, la réponse d'attribution d'adresse comportant des informations paramétriques de configuration ; et
l'exécution (261,262) d'une configuration de données pour une liaison logique entre le noeud maître correspondant et le noeud esclave correspondant en fonction des informations paramétriques de configuration.

2. Procédé selon la revendication 1, comprenant en outre :
la suppression (241, 242), par le RE, de l'adresse du noeud esclave et la signalisation, par le RE, d'un message de conflit d'adresse au REC si l'adresse du noeud esclave n'est pas entièrement composée de 0 et l'adresse incluse dans la commande d'attribution d'adresse et attribuée au noeud esclave dans le RE est différente de l'adresse existante du noeud esclave.

3. Procédé selon la revendication 1, dans lequel l'envoi de la commande d'attribution d'adresse comprend :
l'obtention (21), par le REC, d'un nombre de bonds du RE par balayage de topologie ; et
l'envoi (21), par chaque module de commande principal dans le REC, de la commande d'attribution d'adresse au RE en fonction du nombre de bonds.

4. Procédé selon la revendication 1, dans lequel le réglage de l'adresse comprend :
le réglage (241, 242), par le RE, de l'adresse du noeud esclave correspondant sur l'adresse attribuée après la détermination que la commande d'attribution d'adresse est valable.

5. Procédé selon l'une quelconque des revendications 1 à 4, comprenant en outre avant le réglage, par le RE, de l'adresse du noeud esclave correspondant sur l'adresse attribuée :
le jugement (231, 232), par le RE, que la commande d'attribution d'adresse est valable ou non en fonction d'un identifiant, ID, et d'une norme radio dans la commande d'attribution d'adresse.

6. Procédé selon la revendication 5, dans lequel :
la commande d'attribution d'adresse est valable si l'ID dans la commande d'attribution d'adresse correspond à l'ID du RE et le RE supporte la norme radio dans la commande d'attribution d'adresse.

7. Procédé selon la revendication 5, dans lequel :
la commande d'attribution d'adresse n'est pas valable si l'ID dans la commande d'attribution d'adresse ne correspond pas à l'ID du RE ou le RE ne supporte pas la norme radio dans la commande d'attribution d'adresse.

8. Procédé selon la revendication 1, dans lequel :
la liaison physique est une liaison d'Interface Radio Publique Commune, CPRI.

9. Station de Base, BS, multimode comprenant :
un Contrôleur d'Equipement Radio, REC (41), lequel comprend au moins deux modules de commande principaux (411) et au moins deux noeuds maîtres (412), chaque noeud maître étant réglé pour chaque module de commande principal ;
un Equipement Radio, RE (42), lequel comprend des noeuds esclaves multiples (421), chaque noeud esclave étant réglé pour un noeud maître dans le REC ; et
une liaison physique (43) entre le REC et le RE, la liaison physique comportant des liaisons logiques (44) entre les noeuds maîtres et les noeuds esclaves correspondants, lesquelles sont des liaisons à Commande de Liaison de Données de Haut Niveau, HDLC;
dans laquelle chaque module de commande principal dans le REC est adapté pour envoyer une commande d'attribution d'adresse au RE, la commande d'attribution d'adresse comportant une adresse attribuée à un noeud esclave dans le RE, les adresses des noeuds esclaves multiples dans le RE étant différenciées par un premier bit ou plusieurs premiers bits des adresses ;
le RE est adapté pour régler l'adresse du noeud esclave correspondant sur l'adresse attribuée ;
le noeud esclave est adapté pour envoyer une réponse d'attribution d'adresse au noeud maître correspondant, la réponse d'attribution d'adresse comportant des informations paramétriques de configuration ; et
le noeud maître correspondant et le noeud esclave sont adaptés pour effectuer une configuration de données de la liaison logique correspondante en fonction des informations paramétriques de configuration.

10. BS multimode selon la revendication 9, dans laquelle
chaque module de commande principal est adapté pour supporter des données d'une norme radio différente.

11. BS multimode selon la revendication 9, dans laquelle
le noeud maître est adapté en outre pour effectuer une conversion de données entre le REC et le RE.

12. BS multimode selon la revendication 9, dans laquelle
le RE est adapté en outre pour juger que la commande d'attribution d'adresse est valable ou non en fonction d'un identifiant, ID, et d'une norme radio dans la commande d'attribution d'adresse, et régler l'adresse du noeud esclave sur l'adresse attribuée après avoir jugé que la commande d'attribution d'adresse est valable.
